# NEUE EUROPÄISCHE PATENTSCHRIFT

(11) **EP 1 431 084 B2**
(45) Veröffentlichungstag und Bekanntmachung des Hinweises auf die Entscheidung über den Einspruch: **23.12.2009**
(45) Hinweis auf die Patenterteilung: 02.05.2007
(21) Anmeldenummer: 03025597.0
(22) Anmeldetag: 07.11.2003
(51) Int. Cl.: B60H 1/00

(54) **Gehäuse, insbesondere für ein Klimasystem für ein Kraftfahrzeug**
Housing, in particular for a motor vehicle air conditioning system
Boîtier, notamment pour système de conditionnement de véhicule automobile

(30) Priorität: 20.12.2002 DE 10260932
(43) Veröffentlichungstag der Anmeldung: 23.06.2004
(73) Patentinhaber: Behr GmbH & Co. KG, 70469 Stuttgart (DE)
(72) Erfinder: Hinderberger, Hans-Dieter, 70499 Stuttgart (DE); Knöppel, Klaus-Dieter, 71640 Ludwigsburg (DE); Paul, Michael, Dr., 74343 Sachsenheim (DE)
(74) Vertreter: Grauel, Andreas

(56) Entgegenhaltungen:
- DE-U- 9 100 514
- US-B1- 6 178 764
- PATENT ABSTRACTS OF JAPAN Bd. 018, Nr. 479 (M-1669), 7. September 1994 (1994-09-07) & JP 06 156054 A (TOYO TIRE & RUBBER CO LTD), 3. Juni 1994 (1994-06-03)
- PATENT ABSTRACTS OF JAPAN Bd. 014, Nr. 277 (M-0985), 15. Juni 1990 (1990-06-15) & JP 02 085011 A (NIPPON DENSO CO LTD), 26. März 1990 (1990-03-26)

## Beschreibung

Die Erfindung betrifft ein Gehäuse, insbesondere ein Klimagehäuse oder für ein Klimasystem für ein Kraftfahrzeug, gemäß dem Oberbegriff des Anspruchs 1. Dies wird z.B. in der DE 91 00 514 U gezeigt.

Bei herkömmlichen Klimaanlagen werden, infolge eines entwicklungsbedingten ständig weiteren Absenkens der Fahrzeuggeräusche im Fahrzeuginnenraum, die durch Gebläse verursachten Geräusche zunehmend als störend empfunden. Um die durch die Klimaanlage verursachten Geräusche zu verringern, ist der Einsatz von Luftschallabsorbern in den Klimaanlagen sowie der Einsatz von Resonanzabsorbern (DE 196 13 875 A1) bekannt, jedoch lassen auch diese Lösungen zur Geräuschreduzierung im Fahrzeuginnenraum noch Wünsche offen.

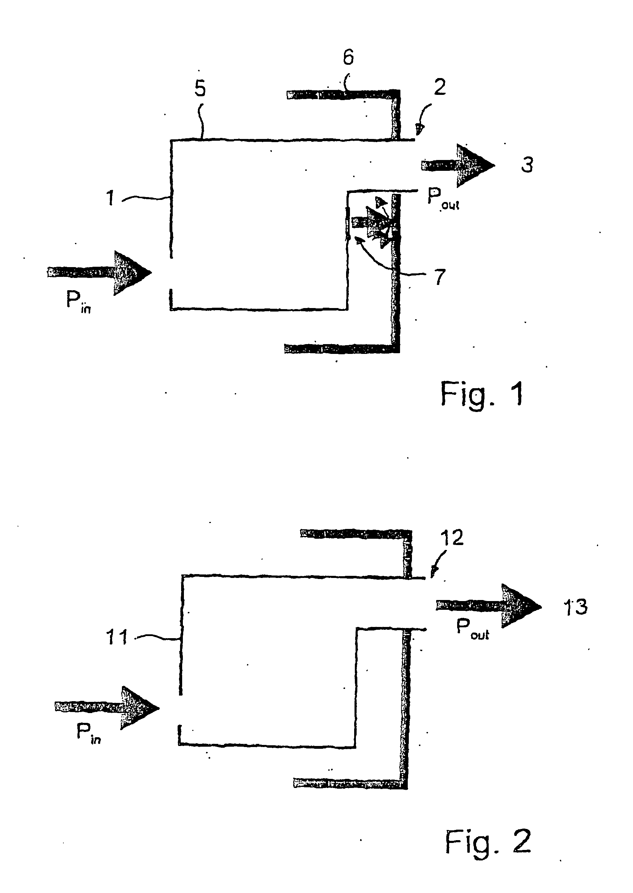

Fig. 2 zeigt einen schematisch dargestellten Schnitt durch ein herkömmliches Gehäuse 11 einer Klimaanlage und veranschaulicht anhand der mit Pᵢₙ und Pₒᵤₜ bezeichneten Pfeile, dass der gesamte, von einem Gebläse (nicht dargestellt) kommende und in das Gehäuse 11 eingeleitete Schall P durch Luftdüsen 12 in den Fahrzeuginnenraum 13 austritt.

Ferner ist aus der DE 36 39 138 A1 ein Gehäuse zur Führung von Luftströmen bekannt, das mit aus Kunststoff bestehenden Wandteilen und mit großflächigen Wandbereichen versehen ist, die zur Schalldämmung mit einer Schaumstoffauflage versehen sind. Die mit Schaumstoff versehenen Wandbereiche bestehen dabei aus einem Stützgerippe aus Kunststoff, das mit Schaumstoff umschlossen ist und das als ein nachträgliches befestigbares Ansatzteil ausgebildet ist, welches auf das mit entsprechenden Aussparungen versehene Gehäuse aufgesetzt und beispielsweise federnd verrastet wird. Hierbei werden insbesondere großwandige Gehäuseteile oder großflächige Bereiche durch absorbierend wirkende Bereiche ersetzt.

Es ist Aufgabe der Erfindung, ein verbessertes Gehäuse zur Verfügung zu stellen.

Diese Aufgabe wird gelöst durch ein Gehäuse mit den Merkmalen des Anspruchs 1. Vorteilhafte Ausgestaltungen sind Gegenstand der Unteransprüche.

Erfindungsgemäß ist das Gehäuse im Bereich seiner Wandung(en), worunter vorliegend weder der Lufteinlass noch der Luftauslass verstanden werden soll, mindestens mit einen schalloffenen Bereich versehen. D.h. es kann im Extremfall auch das gesamte Gehäuse schalloffen ausgebildet sein. Durch diesen schalloffenen Bereich kann Schall austreten, im Gegensatz zum Stand der Technik, gemäß dem im Inneren des luftführenden Bereichs ein schallabsorbierendes Material vorgesehen ist. Somit gelangt auf Grund des schalloffenen Bereichs nicht der gesamte (bzw. restliche) Schall durch Öffnungen (d.h. den Lufteinlass und den Luftauslass), insbesondere Luftdüsen, direkt in den Fahrzeuginnenraum, sondern wird außerhalb des luftführenden Bereichs mittels Dämmmaterialien und Wänden absorbiert und/oder gedämmt. Der schalloffene Bereich hat daher lediglich eine Transmissionswirkung und keine relevante Absorptionswirkung. Durch die erfindungsgemäße Ausgestaltung bleibt die nutzbare Größe des Luftkanals erhalten und der Schall wird nach seinem Austritt durch den schalloffenen Bereich in den in der Umgebung des Luftkanals ohnehin vorhandenen schallabsorbierenden Materialien, wie Spritzwanddämmung, Einlegefliese, Teppiche o.ä. gedämpft.

Bevorzugt wird der schalloffene Bereich durch Materialien gebildet, die einen leichten Austritt des Schalls ermöglichen. Dies sind leichte und/oder poröse Werkstoffe. So kommen auch Materialien in Frage, die bei entsprechender Ausgestaltung schallabsorbierend wirken, bei der erfindungsgemäßen Ausgestaltung jedoch den Schall durchlassen.

Bevorzugt weist der schalloffene Bereich auf: Vlieswerkstoffe, insbesondere kaschierte Vlieswerkstoffe, offenzellige Schäume, insbesondere kaschierte Schäume, Folien aus geschlossenzelligen PU-, PUR-, PP-, PE-, EPP-, PEPP-Schaum, dünne Folien oder Platten, perforierte Materialien, insbesondere mikroperforierte Materialien, sämtliche vorstehenden Materialien alleine oder in beliebiger Kombination. Die vorstehenden Materialien können beispielsweise an luftführenden Bereichen im Gehäuse mit einer luftdichten Haut versehen sein. Dies verhindert ein Ausströmen, ohne die gezielte Schallabgabe wesentlich zu beeinträchtigen.

Der schalloffene Bereich ist in einem Rahmen gehalten, wobei der Rahmen auch durch das entsprechend behandelte oder bearbeitete Material des restlichen schalloffenen Bereichs gebildet werden kann. So können beispielsweise Kunststoff-Fasern im Randbereich erwärmt und verpresst werden, wodurch ein stabiler Rahmen gebildet wird. Der schalloffene Bereich ist stoffschlüssig im Rahmen gehaltet, insbesondere in Folge eines Eingießens in den Rahmen.

Zwischen dem Gehäuse und dem Rahmen ist eine stoffschlüssige Verbindung vorgesehen. Hierbei kommen - in Abhängigkeit der verwendeten Materialien - Schweißverfahren, wie bspw. Ultraschallschweißen, Pressschweißen, Schmelzschweißen, gegebenenfalls Löten (Hart- oder insbesondere Weichlöten), Kleben, Eingießen in Frage.

Bevorzugt sind das Gehäuse und der schalloffene Bereich einstückig ausgebildet, wobei insbesondere Mikroperforationen im Gehäuse vorgesehen sind. Eine derartige Ausgestaltung stellt sicher, dass keine Verbindungsprobleme auftreten.

Bevorzugt wird der schalloffene Bereich unterhalb der Instrumenten-Tafel vorgesehen. Von dort dringt der Schall nicht direkt, sondern wird durch in diesem Bereich vorhandene Dämpfungsmaterialien und Wände abschwächt und gelangt somit mit verminderter Intensität, d.h. gedämpft, in den Fahrzeuginnenraum. Der unter die Instrumenten-Tafel geleitete Schall ist an den Luftdüsen nicht vorhanden, so dass der Geräuschpegel im Fahrzeuginnenraum abgesenkt wird.

Im folgenden wird die Erfindung anhand von Ausführungsbeispielen unter Bezugnahme auf die Zeichnung im einzelnen erläutert. In der Zeichnung zeigen:
- Fig. 1: ein schematisch, teilweise mit einer umgebenden Dämmung dargestelltes erfindungsgemäßes Gehäuse,
- Fig. 2: ein schematisch, teilweise mit einer umgebenden Dämmung dargestelltes Gehäuse gemäß dem Stand der Technik,
- Fig. 3: eine tabellarische Übersicht über verschiedene Ausführungsformen,
- Fig. 4: eine schematische Schnittdarstellung gemäß einer ersten, abgewandelten Ausführungsform,
- Fig. 5: eine schematische Schnittdarstellung gemäß einer zweiten, nicht beantspruchten, abgewandelten Ausführungsform,
- Fig. 6: eine schematische Schnittdarstellung gemäß einer dritten, abgewandelten Ausführungsform,
- Fig. 7: eine schematische Schnittdarstellung gemäß einer vierten, nicht beantspruchten, abgewandelten Ausführungsform,
- Fig. 8: eine schematische Schnittdarstellung gemäß einer fünften, nicht beantspruchten, abgewandelten Ausführungsform,
- Fig. 9: eine schematische Schnittdarstellung gemäß einer sechsten, nicht beantspruchten, abgewandelten Ausführungsform, und
- Fig. 10: eine schematische Schnittdarstellung gemäß einer siebten, nicht beantspruchten, abgewandelten Ausführungsform.

Ein erfindungsgemäßes Gehäuse 1 leitet Luft in einer Klimaanlage, die von einem Gebläse (nicht dargestellt) kommend zu einer oder mehreren Luftdüsen 2 und führt diese einem Fahrzeuginnenraum 3 zu, wobei die Luft im Inneren des Gehäuses 1 bei Bedarf temperiert wird. Das Gehäuse 1 weist eine Wandung 5 auf. Diese Wandung 5 ist in großen Bereichen von einer Dämmung 6 umgeben, die jedoch an den Ein- und Ausleitstellen, d.h. auch bei den Luftdüsen 2, zwangsläufig unterbrochen ist. Ferner weist die Wandung 5 einen schalloffenen Bereich 7 auf, auf dessen Ausgestaltung bei der Beschreibung der einzelnen Ausführungsformen an späterer Stelle eingegangen wird.

Der Schall P, d.h. insbesondere derjenige des Gebläses, wird in das Gehäuse 1 eingeleitet. Dies ist in Fig. 1 symbolisch durch einen Pfeil dargestellt, der mit Pᵢₙ bezeichnet ist und dessen Länge den Geräuschpegel symbolisiert. Der in das Gehäuse 1 eingeleitete Schall P wird nur teilweise durch die Luftdüsen 2 an den Fahrzeuginnenraum 3 abgegeben, wie durch den mit Pₒᵤₜ bezeichneten Pfeil dargestellt. Dabei entspricht die Pfeillänge wiederum dem Geräuschpegel. Ein Teil des Schalls P tritt durch den schalloffenen Bereich 7 aus dem Gehäuse 1 aus, und wird durch die Dämmung 6 weitgehend daran gehindert, in den Fahrzeuginnenraum 3 einzudringen. Ein Großteil dieses Schallanteils wird dissipiert. Somit wird ein Teil des Schalls P vom Fahrzeuginnenraum 3 ferngehalten, wodurch der Geräuschpegel im Fahrzeuginnenraum 3 abgesenkt wird. Dies betrifft den gesamten Frequenzbereich, wobei eine deutliche Wirkung insbesondere in dem Frequenzbereich zwischen 400 und 5000Hz feststellbar ist.

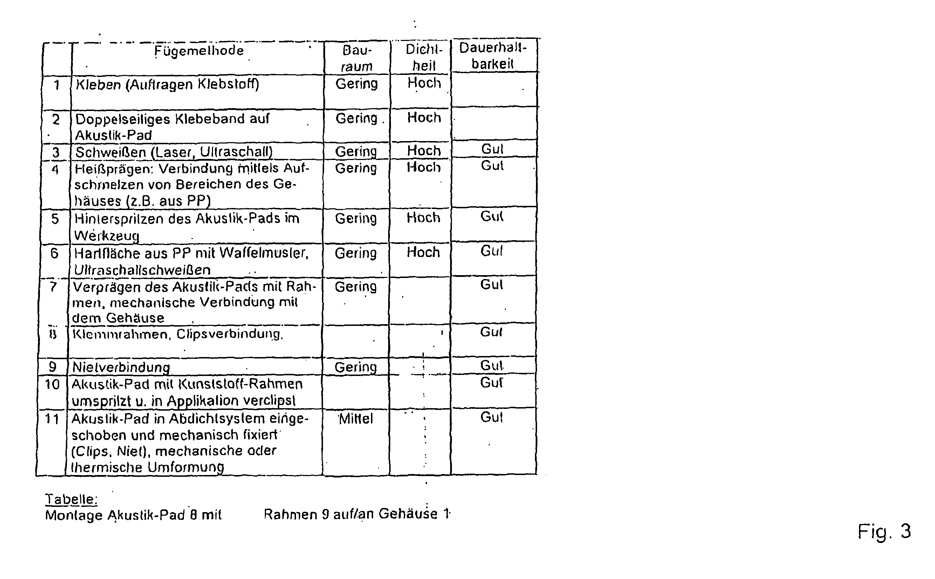

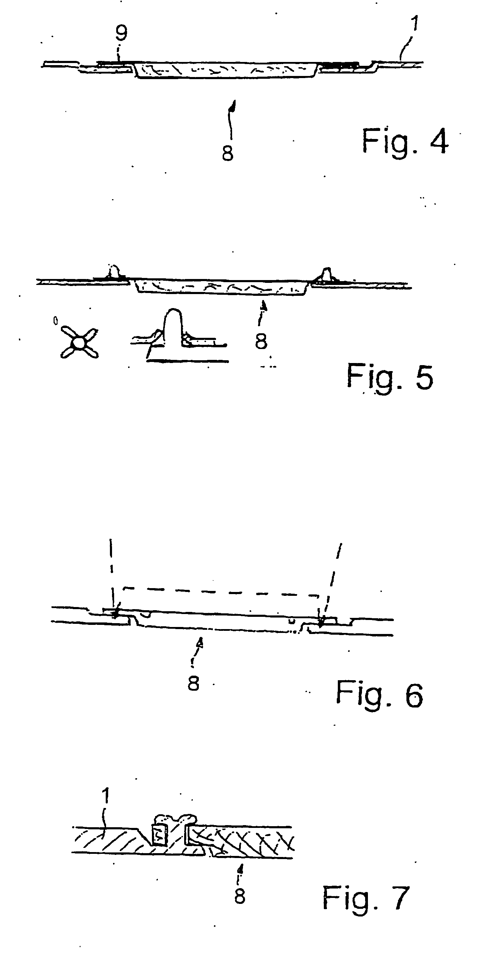

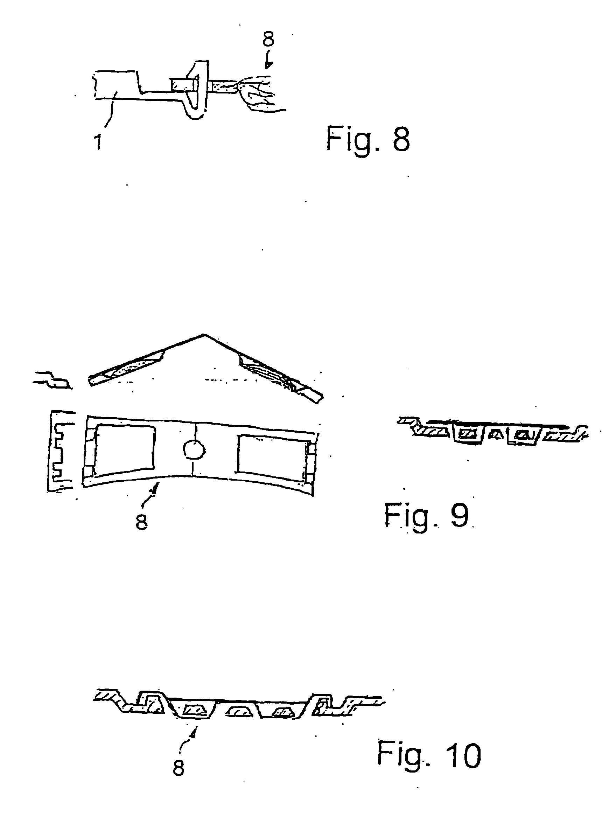

Im folgenden werden mehrere abgewandelte Ausführungsformen unter Bezugnahme auf die Figuren 4 bis 10 kurz beschrieben. In Fig. 3 ist tabellarisch hierzu eine Übersicht über den erforderlichen Bauraum, die erreichbare Dichtheit und die Dauerhaltbarkeit dargestellt. Hierbei enthält die Tabelle auch nicht näher dargestellte und beschriebene Ausführungsformen.

Gemäß sämtlichen abgewandelten Ausführungsformen ist der schalloffene Bereich getrennt vom Gehäuse 1 ausgebildet und wird im folgenden als Akustik-Pad 8 bezeichnet, welcher teilweise von einem Rahmen 9 gehalten und fixiert wird. Als Materialien kommen schalltransparente und vorzugsweise auch schall-absorbierende Materialien in Frage, insbesondere Wattevlies aus Polyester-, PP-, Baumwoll- oder sonstigen Fasern, Schaumstoff-Formteile, insbesondere kaschiert oder verhautet, mikroperforierte Bauteile aus diversen Materialien, Folien und dünne Platten aller Art. Dabei kann der Akustik-Pad 8 beim Einbau in einem luftführenden Gehäuse 1 mit einer luftdichten Haut versehen sein. Der Rahmen 9 kann aus dem gleichen Material wie der Akustik-Pad 8 mit einer entsprechenden Verdichtung hergestellt werden.

Gemäß der in Fig. 4 dargestellten ersten abgewandelten Ausführungsform (Nr. 1 in der Tabelle von Fig. 3) ist der Akustik-Pad 8 mittels eines Heißklebers an das Gehäuse 1 des Luftverteilers geklebt. Hierbei erfolgt der Auftrag des Heißklebers vollautomatisch mit Hilfe eines Roboters. Allerdings ist eine Vorbehandlung des aus PP bestehenden Gehäuses 1 im Bereich der Klebeflächen erforderlich.

Gemäß der in Fig. 6 dargestellten dritten abgewandelten Ausführungsform (Nr. 4 in der Tabelle von Fig. 3) ist der Akustik-Pad 8 mittels Heißprägen am Gehäuse 1 angebracht. Hierfür wird durch einen Heißstempel (gestrichelt dargestellt) ein Teil des Gehäuses 1 und des Akustik-Pads 8 (aus Vliesstoff oder Polyester) derart erwärmt, dass die Materialien zu schmelzen beginnen und eine stoffschlüssige Verbindung entsteht.

### Bezugszeichenliste

- 1, 11: Gehäuse
- 2, 12: Luftdüse
- 3, 13: Fahrzeuginnenraum
- 5: Wandung
- 6: Dämmung
- 7: schalloffener Bereich
- 8: Akustik-Pad
- 9: Rahmen
- P, Pᵢₙ, Pₒᵤₜ: Schall

## Patentansprüche

1. Gehäuse, insbesondere einer Klimaanlage oder für ein Klimaanlagensystem in einem Kraftfahrzeug, wobei das Gehäuse (1) im Bereich seiner Wandung (5) mindestens einen schalloffenen Bereich (7), der durch leichte und/oder poröse Werkstoffe gebildet ist, aufweist, **dadurch gekennzeichnet, dass** der schalloffene Bereich (7) einen Rahmen (9) aufweist und zwischen dem Gehäuse (1) und dem Rahmen (9) eine stoffschlüssige Verbindung mittels Schweißens, Lötens, Eingießens oder Heißprägens vorgesehen ist.

2. Gehäuse nach Anspruch 1, **dadurch gekennzeichnet, dass** der schalloffene Bereich (7) durch Materialien gebildet ist, die einen leichten Austritt des Schalls ermöglichen.

3. Gehäuse nach einem der vorhergehenden Ansprüche, **dadurch gekennzeichnet, dass** der schalloffene Bereich (7) Vlieswerkstoffe, insbesondere kaschierte Vlieswerkstoffe, offenzellige Schäume, insbesondere kaschierte Schäume, Folien aus geschlossenzelligen PU-, PUR-, PP-, PE-, EPP-, PEPP-Schaum, dünne Folien oder Platten, perforierte Materialien, insbesondere mikroperforierte Materialien, sämtliche vorstehenden Materialien alleine oder in beliebiger Kombination aufweist.

4. Gehäuse nach einem der vorhergehenden Ansprüche, **dadurch gekennzeichnet, dass** der schalloffene Bereich (7) mit dem Rahmen (9) stoffschlüssig verbunden ist.

5. Gehäuse nach einem der vorhergehenden Ansprüche, **dadurch gekennzeichnet, dass** zwischen dem Gehäuse (1) und dem schalloffenen Bereich (7) und/oder dem Rahmen (9) desselben eine Klebeverbindung vorgesehen ist.

6. Gehäuse nach einem der vorhergehenden Ansprüche, **dadurch gekennzeichnet, dass** zwischen dem Gehäuse (1) und dem schalloffenen Bereich (7) und/oder dem Rahmen (9) desselben ein doppelseitiges Klebeband vorgesehen ist.

7. Gehäuse nach einem der vorhergehenden Ansprüche, **dadurch gekennzeichnet, dass** das Gehäuse (1) und der schalloffene Bereich (7) einstückig ausgebildet sind.

8. Klimaanlage, insbesondere für ein Kraftfahrzeug, **gekennzeichnet durch** ein Gehäuse (1) gemäß einem der vorstehenden Ansprüche.

9. Klimaanlage nach Anspruch 8, **dadurch gekennzeichnet, dass** der schalloffene Bereich (7) den Schall (P) in einen schalloffenen Bereich (7) unterhalb der Instrumenten-Tafel, der Mittelkonsole, der Tür- und/oder Seitenverkleidungen, des Kofferraums oder sonstiger Einbauräume ableitet.

## Claims

1. A housing, in particular for an air conditioning unit or for an air conditioning unit system for a motor vehicle, wherein the housing (1) has at least one area (7) which is open to sound in the area of its wall (5), which is formed by light and/or porous materials,
**characterised in that**
the area (7) which is open to sound comprises a frame (9) and that provided between the housing (1) and the frame (9) is a connection made by the addition of material using welding, soldering, pouring or hot stamping.

2. A housing in accordance with claim 1,
**characterised in that**
the area (7) which is open to sound is formed by materials which enable an easy exit of the sound.

3. A housing in accordance with one of the preceding claims,
**characterised in that**
the area (7) which is open to sound comprises non-woven materials, in particular backed non-woven materials, open-celled foams, in particular backed foams, films made of closed-celled PU, PUR, PP, PE, EPP or PEPP foam, thin films or sheets, perforated materials, in particular microperforated materials, it being possible to use all the aforementioned materials either alone or in any combination.

4. A housing in accordance with one of the preceding claims,
**characterised in that**
the area (7) which is open to sound is connected to the frame (9) by the addition of a material.

5. A housing in accordance with one of the preceding claims,
**characterised in that**
provided between the housing (1) and the area (7) which is open to sound and/or the frame (9) thereof is an adhesive connection.

6. A housing in accordance with one of the preceding claims,
**characterised in that**
provided between the housing (1) and the area (7) which is open to sound and/or the frame (9) thereof is a double-sided adhesive strip.

7. A housing in accordance with one of the preceding claims,
**characterised in that**
the housing (1) and the area (7) which is open to sound are designed as one piece.

8. An air conditioning unit, in particular for a motor vehicle housing,
**characterised by**
a housing (1) as disclosed in one of the preceding claims.

9. An air conditioning unit in accordance with claim 8,
**characterised in that**
the area (7) which is open to sound diverts the sound (P) to an area (7) which is open to sound below the instrument panel, the central console, the door and/or lateral trims, the boot or other areas.

## Revendications

1. Carter, en particulier d'une climatisation ou bien pour un système de climatisation d'un véhicule automobile, où le carter (1), dans la zone de sa paroi (5), présente au moins une zone (7), ouverte au son, qui est formée par des matériaux légers et / ou poreux,
**caractérisé en ce que** la zone (7) ouverte au son présente un cadre (9) et **en ce qu'**il est prévu, entre le carter (1) et le cadre (9), un assemblage par liaison de matière réalisé par soudage, brasage, scellement ou estampage à chaud.

2. Carter selon la revendication 1, **caractérisé en ce que** la zone (7) ouverte au son est formée par des matériaux qui permettent une sortie aisée du son.

3. Carter selon l'une ou l'autre des revendications précédentes, **caractérisé en ce que** la zone (7) ouverte au son présente des matériaux non tissés, en particulier des matériaux non tissés contrecollés, des mousses à alvéoles ouvertes, en particulier des mousses contrecollées, des feuilles de mousse - à alvéoles fermées - de polyuréthane (PU), de polyuréthane réticulé (PUR), de polypropylène (PP), de polyéthylène (PE), de polypropylène expansé (EPP), de polyéthylène - polypropylène (PEPP), des feuilles ou des plaques minces, des matériaux perforés, en particulier des matériaux microperforés, la totalité des matériaux précédents étant utilisés seuls ou bien combinés de façon quelconque.

4. Carter selon l'une quelconque des revendications précédentes, **caractérisé en ce que** la zone (7) ouverte au son et le cadre (9) sont assemblés par liaison de matière.

5. Carter selon l'une quelconque des revendications précédentes, **caractérisé en ce qu'**un assemblage collé est prévu entre le carter (1) et la zone (7) ouverte au son et / ou le cadre (9) de cette zone.

6. Carter selon l'une quelconque des revendications précédentes, **caractérisé en ce qu'**une bande adhésive double face est prévue entre le carter (1) et la zone (7) ouverte au son et / ou le cadre (9) de cette zone.

7. Carter selon l'une quelconque des revendications précédentes, **caractérisé en ce que** le carter (1) et la zone (7) ouverte au son sont configurés en formant un seul et même élément.

8. Système de climatisation, en particulier pour un véhicule automobile, **caractérisé par** un carter (1) selon l'une quelconque des revendications précédentes.

9. Système de climatisation selon la revendication 8, **caractérisé en ce que** la zone (7) ouverte au son dévie le son (P) dans une zone (7) ouverte au son et située au-dessous du tableau de bord, de la console centrale, des garnitures de portes et / ou des garnitures latérales, au-dessous du coffre à bagages ou de tout autre espace encastré.
